# EUROPEAN PATENT SPECIFICATION

(11) **EP 1 396 621 B1**
(45) Date of publication and mention of the grant of the patent: **09.09.2015**
(21) Application number: 02769563.4
(22) Date of filing: 10.05.2002
(51) Int. Cl.: C23C 2/02, C23C 8/08, C23C 8/80, C23C 30/00, F01D 5/28, F01D 17/16, F02B 39/00

(54) **SURFACE-REFORMED EXHAUST GAS GUIDE ASSEMBLY OF VGS TYPE TURBO CHARGER, AND METHOD OF SURFACE-REFORMING COMPONENT MEMBER THEREOF**
OBERFLÄCHENVERBESSERTE ABGASFÜHRUNGSANORDNUNG FÜR TURBOLADER MIT VARIABLER GEOMETRIE UND VERFAHREN ZUR OBERFLÄCHENVERBESSERUNG EINER KOMPONENTE DAVON
ENSEMBLE DE GUIDAGE DE GAZ D'ECHAPPEMENT A SURFACE REFORMEE DANS UN TURBOCOMPRESSEUR DE TYPE VGS ET PROCEDE DE REFORMAGE DE SURFACE DES ELEMENTS CONSTITUTIFS DE CET ENSEMBLE

(30) Priority: 10.05.2001 JP 2001139422; 10.05.2001 JP 2001139425; 10.05.2001 JP 2001139430; 10.05.2001 JP 2001139447; 10.05.2001 JP 2001139453; 10.05.2001 JP 2001139474; 10.05.2001 JP 2001139493; 10.05.2001 JP 2001139498
(43) Date of publication of application: 10.03.2004
(73) Proprietor: Akita Fine Blanking Co., Ltd., Shimada-shi, Shizuoka 427-0103 (JP); Ishikawajima-Harima Heavy Industries Co., Ltd., Chiyoda-ku, Tokyo 100-8182 (JP)
(72) Inventor: OHISHI, Shinjiro, Shimada-shi, Shizuoka 427-0017 (JP)
(74) Representative: Hague, Alison Jane
(86) International application number: PCT/JP2002/004553
(87) International publication number: WO 2002/092980

(56) References cited:
- EP-A- 0 589 072
- EP-A1- 0 482 831
- EP-A2- 1 054 077
- DE-A1- 3 038 026
- JP-A- 1 222 042
- JP-A- 2 301 553
- JP-A- 3 188 258
- JP-A- 4 280 955
- JP-A- 7 150 332
- JP-A- 10 311 222
- JP-A- 11 158 603
- JP-A- 11 197 762
- JP-A- 11 350 108
- JP-A- 63 147 921
- JP-A- 63 147 921
- JP-A- 2000 001 765
- US-A- 5 792 282

## Description

### TECHNICAL FIELD

The present invention relates generally to a turbocharger for use in a vehicle engine or the like, and more particularly to a component member of an exhaust gas guide assembly incorporated therein.

### BACKGROUND ART

A turbocharger is known as a supercharger used as means for improving the power output and the performance of an J automobile engine. The turbocharger is an apparatus in which a turbine is driven by the exhaust energy of the engine to rotate a compressor with the power of the turbine, whereby the engine is supercharged to have more air fed into it than fed into it by natural suction. The turbocharger, when the engine is running at a low rotational speed, can not avoid giving a slow-moving feeling caused by the reduced flow rate of the exhaust gas and continued until the exhaust turbine runs efficiently, and necessitating a subsequent time or a so-called turbo-lag before the turbine rapidly reaches the full-running state. Furthermore, in the case of a diesel engine which runs inherently at low rotational speeds, there is a disadvantage that it is difficult to produce an effect of the turbocharger.

Therefore, a VGS turbocharger that works efficiently even when the engine is running at low rotational speeds has been developed. The turbocharger of this type is adapted to obtain a high power output when the engine is running at low rotational speeds by throttling flow of exhaust gas at a low flow rate with adjustable blades (vanes) to increase the velocity of the exhaust gas and increase work of an exhaust turbine. Especially, in a diesel engine in which the amount of NOx contained in its exhaust gas has become an issue in recent years, the VGS turbocharger is a useful turbocharger capable of improving the engine efficiency even when the engine is running at low rotational speeds.

In the VGS turbocharger, an exhaust gas guide assembly is used in a high-temperature atmosphere of exhaust gas. Therefore, for the manufacture of the assembly, raw materials having a heat-resistance, for example, heat resisting materials such as SUS, SUH, SCH, NCF superalloys and the like according to the JIS used. However, since the assembly is used under very severe conditions, its life or durability has a certain limit. Therefore, further improvement of the durability of the assembly is desired.

Among the components or portions of the exhaust gas guide assembly, a sliding portion especially needs to secure and maintain constant slidability in a high-temperature environment and it has been difficult to suppress its friction coefficient to a small value without generating any long-time metal adhesion, seizure or the like.

An Ni-Cr-based heat resisting member is suitable for a constituent material for the sliding portion in terms of high-temperature strength thereof. However, it is difficult to use the member for the sliding portion because the member lacks high-temperature slidability due to the fact that the surface hardness of the member in a high-temperature environment is much lower than that in a room-temperature environment.

The present invention has been made in view of such background and attempts to improve high-temperature wear property, oxidation resistance, high-temperature hardness or the like of a member constituting an exhaust gas guide assembly used for a long period of time under an exhaust gas atmosphere in heat cycles accompanied by high temperatures of 700°C or above.

EP-A-0589072 discloses a turbocharger, portions of which exposed to the erosive action of abrasive particles entrained in the flow of exhaust gas are coated with an anti-erosion coating containing carbides. However this reference does not address the problems associated with improving the durability of sliding portions whilst maintaining a low coefficient of friction.

JP 63 147921A discloses a turbocharger in which sliding contact surfaces are provided with a nitriding layer.

### DISCLOSURE OF THE INVENTION

Viewed from one aspect the present invention provides an exhaust gas guide assembly, having a surface modification applied thereto, for a VGS turbocharger comprising:
adjustable blades for suitably controlling the flow rate of exhaust gas discharged from an engine to rotate an exhaust turbine wheel;
a turbine frame which rotatably supports the adjustable blades at the outside of an outer periphery of the turbine wheel; and
a blade adjusting mechanism for suitably rotating the adjustable blades to control the flow rate of the exhaust gas;
wherein flow of the exhaust gas at a low flow rate is throttled by the adjustable blades to increase the velocity of the exhaust gas so that a high output power is obtained at low rotational speeds;
characterized in that:
   a heat resisting member constituting a sliding portion of the exhaust gas guide assembly is provided with a coating of chromium carbide having a thickness of not less than 5 µm on surfaces of the sliding portion which come into plane contact with each other.

The sliding portion refers to a section where a moving member and a stationary member come into a plane contact with each other typically seen between the shaft portion 12 of the adjustable blade 1 and receiving hole 25 of the turbine frame 2 holding the adjustable blade 1 rotatably, in the exhaust gas guide assembly A which will be described later.

Preferably a heat resisting member constituting a sliding portion of the exhaust gas guide assembly is provided on a surface thereof with a coating of chromium carbide in a single phase.

Even when individual Cr or C elements that do not form chromium carbide are present in the coating of single phase chromium carbide or in a coating sublayer, these elements do not interfere at all the action for improving the high-temperature slidability. Therefore, the phase "single phase" herein includes such a case.

Furthermore, the chromium carbides for a component of the coating include Cr₂₃C₆, Cr₇C₃, Cr₃C₂ and the like, and Cr₇C₃ is especially preferred since it copes with both of the coating formability and the high-temperature slidability.

In certain embodiments the heat resisting member constituting the sliding portion comprises a nickel-containing heat resisting member.

In certain embodiments the heat resisting member constituting the sliding portion comprises a nickel-containing austenitic heat resisting member.

The nickel-containing heat resisting member refers to a heat resisting member containing 25% or more of nickel and, more specifically, a member made from SUH660, Incoloy 800H, Inconel 713C or the like can be enumerated.

The austenitic heat resisting member basically refers to an austenitic stainless steel member, and more specifically, a member made.from SUS304, SUS316, SUS310S, SUH310, SCH21, SCH22 or the like can be enumerated.

In certain embodiments the heat resisting member constituting the sliding portion comprises a nickel-free heat resisting member.

The coating provided on the nickel-free heat resisting member constituting the exhaust gas guide assembly preferably comprises Cr₇C₃ and/or Cr₂₃C₆.

In certain embodiments the heat resisting member constituting the sliding portion comprises a ferritic SUS type heat resisting member.

The coating provided on the ferritic SUS type heat resisting member constituting the exhaust gas guide assembly preferably comprises Cr₇C₃ and/or Cr₂₃C₆.

The nickel-free heat resisting member refers to a heat resisting member that does not contain any nickel such as 9Cr-1Mo, 12Cr-1/2Mo, 18Cr-5Al or the like.

Furthermore, the ferritic SUS type heat resisting member refers to SUS420J2, SUS440C, SUS444 or the like.

Yet furthermore, the chromium carbides for a component of the coating include Cr₂₃C₆, Cr₇C₃, Cr₃C₂ and the like, and Cr₇C₃ is especially preferred in terms of the coating formability and the heat resistance.

In certain embodiments the heat resisting member constituting the sliding portion comprises a nickel-chromium heat resisting member.

The nickel-chromium-based heat resisting member refers to a member made from a steel containing simultaneously much nickel and much chromium such as Ni-containing SUS, SUH, SCH, NCF superalloy or the like.

Viewed from another aspect the present invention provides a method for applying a surface modification to a component member of an exhaust gas guide assembly for a VGS turbocharger, wherein the exhaust gas guide assembly includes adjustable blades for suitably controlling the flow rate of exhaust gas discharged from an engine to rotate an exhaust turbine wheel; a turbine frame which rotatably supports the adjustable blades at the outside of an outer periphery of the turbine wheel; and a blade adjusting mechanism for suitably rotating the adjustable blades to control the flow rate of the exhaust gas; wherein flow of the exhaust gas at a low flow rate is throttled by the adjustable blades to increase the velocity of the exhaust gas so that a high output power is obtained at low rotational speeds, and the component member of the exhaust gas guide assembly is subjected to a surface treatment, characterized in that: the method comprises the steps of: removing a thin layer of oxide from a surface of a high-nickel and high-chromium heat resisting member constituting a sliding portion of the exhaust gas guide assembly in advance by a reducing gas under a reduced pressure; then performing a treatment with a carburizing gas having a weak inter-carbon polymerization; and subsequently, coating the surface of the high-nickel and high-chromium heat resisting member constituting said sliding portion of the exhaust gas guide assembly with a coating of chromium carbide having a thickness of not less than 5 µm on surfaces of the sliding portion which come into plane contact with each other.

Preferably a heat resisting member constituting a sliding portion of the exhaust gas guide assembly is provided on a surface thereof with a coating of chromium carbide in a single phase.

The treatment with a carburizing gas may be carried out by making the carburizing gas flow pulsedly.

A method for applying a surface modification according to one embodiment will be described.

When a high-nickel and high-chromium heat resisting member (for example) constituting the exhaust gas guide assembly is carburized, first, under a reduced pressure of 13.3-1330 Pa (0.1-10 Torr), a thin oxide layer on the surface is removed by a reducing gas such as hydrogen or the like. Thereafter, when a carburization process is carried out, in order to suppress precipitation of carbide in and out of crystalline grains, a nitriding process is carried out, flowing a dissociated ammonium gas along the surface in the case of a material having the chromium content of 25% or more.

Next, after flowing a carburizing gas having a weak inter-carbon polymerization property such as methane, carbon mono-oxide and, depending on the situation, acetylene, for example, pulsedly, the surface layer of the high-nickel and high-chromium heat resisting member can be coated with carbide.

According to the described embodiment, it is possible to form a coating on the surface of the member by a characteristic gas-phase carburization in which carbon atoms carburized in a state of significant unequilibrium supersaturated solid-solution are present.

The method for surface coating is a conventional method. Furthermore, it is preferable to apply such a surface modification to all the constituent members of the exhaust gas guide assembly. However, this is not always necessary and it is possible to apply the surface modification to a portion that need the surface modification depending on the sliding state of a member.

Preferably the coating of chromium carbide provided at least on the member constituting the sliding portion of the exhaust gas guide assembly comprises Cr₇C₃ and/or Cr₂₃C₆.

Viewed from a further aspect the present invention provides a method for applying a surface modification to a component member of an exhaust gas guide assembly for a VGS turbocharger, wherein the exhaust gas guide assembly includes adjustable blades for suitably controlling the flow rate of exhaust gas discharged from an engine to rotate an exhaust turbine wheel; a turbine frame which rotatably supports the adjustable blades at the outside of an outer periphery of the turbine wheel; and a blade adjusting mechanism for suitably rotating the adjustable blades to control the flow rate of the exhaust gas; wherein flow of the exhaust gas at a low flow rate is throttled by the adjustable blades to increase the velocity of the exhaust gas so that a high output power is obtained at low rotational speeds, and the component member of the exhaust gas guide assembly is subjected to a surface treatment, characterized in that: the method comprises the steps of: ionizing carbon atoms under a reduced pressure in a plasma; carburizing a high-nickel and high-chromium heat resisting member constituting a sliding portion of the exhaust gas guide assembly with ionized carbon atoms to form an unequilibrium saturated solid-solution while the member is serving as an electrode; and subsequently, coating the surface of the high-nickel and high-chromium heat resisting member constituting said sliding portion of the exhaust gas guide assembly with a coating of chromium carbide having a thickness of not less than 5 µm on surfaces of the sliding portion which come into plane contact with each other.

A method for applying a surface modification according to another embodiment will be described.

When a high-nickel and high-chromium heat resisting member (for example) which constitutes the exhaust gas guide assembly and which has a surface modification applied thereto is carburized, first, under a high-vacuum of 1.33x10⁻² - 1.33x10⁻⁴ (10⁻⁴-10⁻⁶) Torr, prior to carburizing, in order to suppress precipitation of carbide in and out of the crystalline grains, a nitriding process is carried out, flowing a dissociated ammonium gas along the surface in the case of a material having the chromium content of 25% or more.

Next, carbon atoms are ionized in a plasma state and the carbon is caused to permeate into the material as one electrode. Thereafter, the surface layer of the high-nickel and high-chromium heat resisting member can be enriched by dissolved carbide.

According to the described embodiment, it is possible to form a coating on the surface of the member by characteristic ion carburizing in which a large amount of carbon atoms carburized in a substantially almost complete unequilibrium supersaturated solid-solution state are present, diffuse freely to form a carbide layer.

The surface coating method is a conventional method (TD salt bath treatment or the like). Furthermore, it is preferable to apply such a surface modification to all the constituent members of the exhaust gas guide assembly. However, this is not always necessary and it is possible to apply the surface modification to a portion that need the surface modification depending on the sliding state of a member.

The high-nickel and high-chromium heat resisting member refers to a heat resisting member containing 8% or more of nickel and 18% or more of chromium and, more specifically, SUS304, SUS316, SUS310S, SUH310, SUH660, Incoloy 800H, Inconel 713C, SCH21, SCH22, Inconel 625, SUH661 and the like can be enumerated.

Preferably the surface is coated with chromium carbide by a TD salt bath method.

The TD salt bath method refers to a method in which a so-called salt bath is prepared by mixing various chlorides in borax as the base, further mixing oxide of the metal corresponding to the carbide of the metal to be coated and maintaining them at a high-temperature, and then a high-temperature surface reaction is caused by dipping the member to be coated on in the salt bath, whereby a coating of necessary metal carbide is formed.

### BRIEF DESCRIPTION OF DRAWINGS

Fig. 1(a) is a perspective view showing a VGS turbocharger having a turbine frame integrated therein according to the present invention, and Fig. 1(b) is an exploded perspective view showing an exhaust gas guide assembly according to the present invention; and
Fig. 2 shows data of comparison of the durability between a non-coated product and a coated product according to the present invention.

### BEST MODE FOR CARRYING OUT THE INVENTION

The present invention will be described hereinbelow more specifically. The description will be made first of an exhaust gas guide assembly of a VGS turbocharger according to an embodiment of the present invention, and then of a method for applying a surface modification to constituent members (including a sliding portion) of the exhaust gas guide assembly.

### (1) Exhaust Gas Guide Assembly

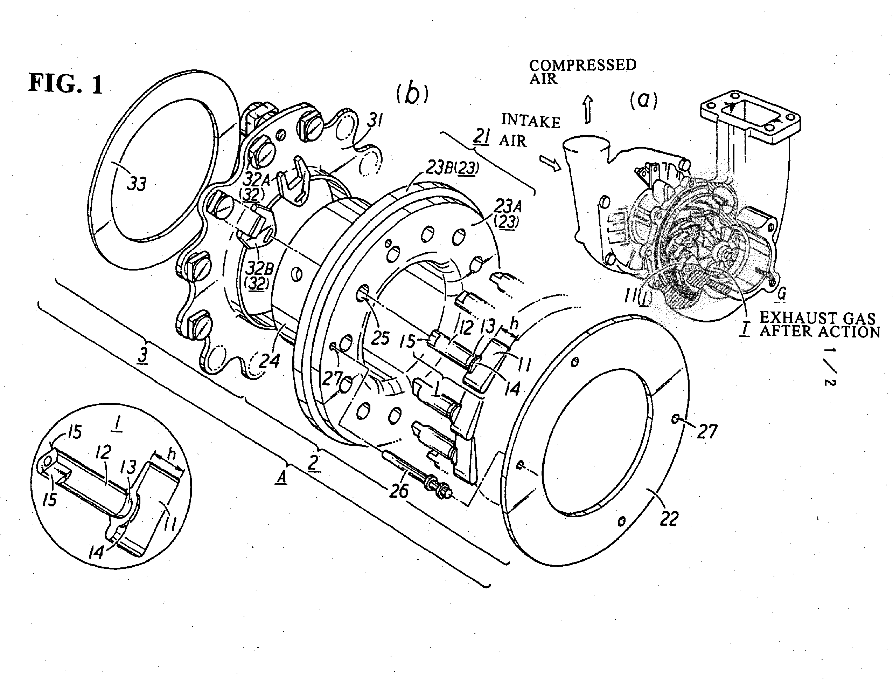

An exhaust gas guide assembly A suitably controls the flow rate of exhaust gas G by throttling the exhaust gas G as necessary while an engine is running at low rotational speeds. The exhaust gas guide assembly, as shown in Fig. 1 as an example, comprises a plurality of adjustable blades 1 for setting substantially the flow rate of the exhaust gas, provided at the outside of an outer periphery of an exhaust turbine wheel T, a turbine frame 2 for rotatably supporting the adjustable blades 1 and a blade adjusting mechanism 3 for rotating the adjustable blades 1 by a predetermined angle to set the flow rate of the exhaust gas G as necessary. Each component will be described.

First, the adjustable blade 1 will be described. As shown in Fig. 1 as an example, a plurality of adjustable blades 1 (approximately 10-15 blades for one unit of the exhaust gas guide assembly A) are arranged in an arc along the outer circumference of the exhaust turbine wheel T so that the adjustable blades 1 rotate respectively almost the same angle to suitably control the flow rate of the exhaust gas. Each adjustable blade 1 comprises a blade portion 11 and a shaft portion 12. The blade portion 11 is formed to have a certain width corresponding mainly to a width of the exhaust Turbine wheel T and an airfoil shape in cross-section in a width direction such that the exhaust gas G is effectively directed to the exhaust turbine wheel T. Hereinafter, the width dimension of the blade portion 11 is referred to as "blade height h". The shaft portion 12 is formed to be continues to and integrated with the blade portion 11, so that the blade portion 11 serves as a rotation shaft for the blade portion 11 to be moved.

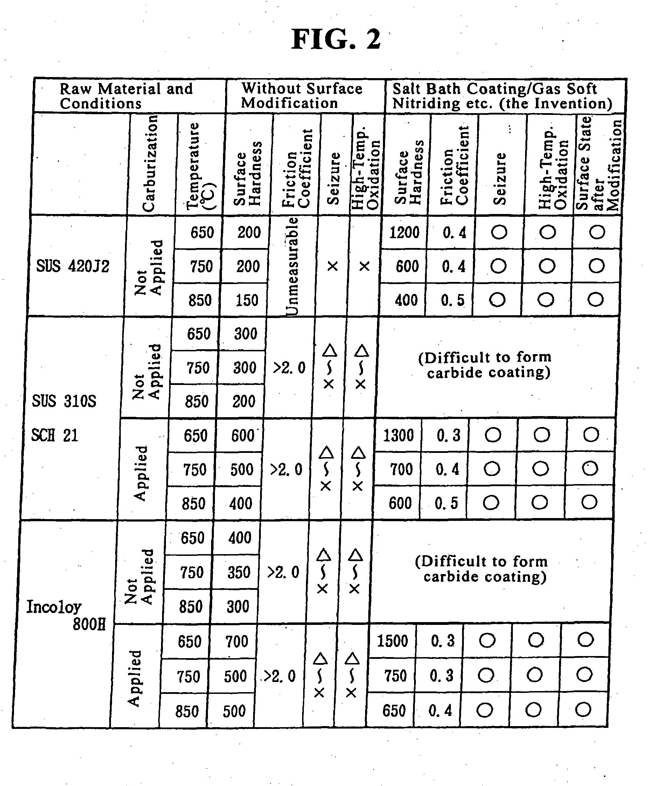

In a portion connecting the blade portion 11 and the shaft portion 12, a taper portion 13 tapering from the shaft portion 12 to the blade portion 11 and a flange portion 14 having a somewhat larger diameter than that of the shaft portion 12 are formed continuously. A bottom face of the flange portion 14 is formed to be almost flush with an end face of the blade portion 11 on the side of the shaft portion 12, to thereby ensure a smooth rotation of the adjustable blade 1 through the bottom face in a state where the adjustable blade 1 is fitted to the turbine frame 2. Furthermore, at a distal end of the shaft portion 12, reference planes 15 serving as a basis for mounting of the adjustable blade 1 is formed. These reference planes 15 are a portion fixed by caulking or the like to the blade adjusting mechanism 3. The reference planes 15, as shown in Figs. 1 and 2 as an example, are formed by cutting out the shaft portion 12 on its opposite sides in a manner to have a substantially constant inclination with respect to the blade portion 11.

Next, the turbine frame 2 will be described. The turbine frame 2 is constructed as a frame member for rotatably holding the plurality of adjustable blades 1. The turbine frame 2, as shown in Fig. 1 as an example, is constructed to sandwich the adjustable blades 1 by a frame segment 21 and a holding member 22 thereof. The frame segment 21 comprises a flange portion 23 for receiving the shaft portions 12 of the adjustable blades 1 and a boss portion 24 for being fitted therearound with the blade adjusting mechanism 3 described later. In such construction, the same number of receiving holes 25 as the number of the adjustable blades 1 are formed on a peripheral portion of the flange portion 23 spaced regularly.

The holding member 22 is formed to have a disk shape having an opening at the center thereof as shown in Fig. 1. In order to always rotate the blade portions 11 of the adjustable blades 1 sandwiched by the frame segment 21 and the holding member 22 smoothly, the dimension between the frame segment 21 and the holding member 22 is maintained at a substantially constant dimension (approximately the dimension of the blade width of the adjustable blade 1) and, as an example, the dimension is maintained by caulking pins 26 provided at four positions on the radially outer side of the. receiving holes 25. Correspondingly, pin insertion holes 27 for receiving the respective caulking pins 26 are formed on the frame segment 21 and holding member 22.

In the illustrate embodiment, the flange portion 23 of the frame segment 21 comprises two flange parts, i.e. a flange part 23A having almost the same diameter as that of the holding member 22 and a flange part 23B having a somewhat larger diameter than that of the holding member 22. These flange parts are formed of a single member. However, in the case where it is too complicated to make the flange parts 23A and 23B by processing the same member, the flange parts 23A and 23B may be constructed in such a manner that two flange parts having different diameters are formed separately and then joined to each other by caulking, brazing or the like.

Next, the blade adjusting mechanism 3 will be described. The blade adjusting mechanism 3 is provided on the outer periphery of the boss portion 24 of the turbine frame 2 to rotate the adjustable blades 1 so as to control the flow rate of the exhaust gas. The blade adjusting mechanism 3, as shown in Fig. 1 as an example, comprises a rotating member 31 for substantially causing the rotation of the adjustable blades 1 in the assembly and transmitting members 32 for transmitting the rotation to the adjustable blades 1. As shown in Fig. 1, the rotating member 31 is formed to have an approximate disk shape having an opening at the center thereof and provided on a peripheral portion thereof with the same number of transmitting members 32 as that of the adjustable blades 1 spaced at regular intervals. The transmitting member 32 comprises a driving element 32A rotatably mounted on the rotating member 31 and a driven element 32B fitted fixedly on the reference planes 15 of the adjustable blade 1. In the state where the driving element 32A and the driven element 32B are connected to each other, the rotation is transmitted. More specifically, the driving element 32A having the shape of a rectangular piece is pivotally mounted to the rotating member 31, and the driven element 32B which is formed to be substantially U-shaped to receive the driving element 32A is fixed on the reference planes 15 at the distal end of the adjustable blade 1. The rotating member 31 is attached to the boss portion 24 such that the driving elements 32A having a rectangular piece shape are fitted into the respective U-shaped driven elements 32B, to thereby engage the driving elements 32A and the driven elements 32B with each other.

In the initial state where the plurality of adjustable blades 1 are attached, in order to align them on the circumference, it is necessary that each of the adjustable blades 1 and a respective one of the driven elements 32 B are attached to form a predetermined angle. In the illustrated embodiment, the reference planes 15 of the adjustable blade 1 mainly perform such an alignment function. Furthermore, in the case where the rotating member 31 is simply fitted into the boss portion 24, it is feared that the engagement of the transmitting member 32 is released when the rotating member 31 slightly moves away from the turbine frame 2. Therefore, in order to prevent this, a ring 33 or the like is provided on the side opposite to the turbine frame 2 such that the rotating member 31 is interposed between the ring 33 and the turbine frame 2, to thereby urge the rotating member 31 toward the turbine frame 2.

By such a structure, when the engine is running at low rotational speeds, the rotating member 31 of the blade adjusting mechanism 3 is rotated as necessary, and the rotation is transmitted to the shaft portions 12 through the transmitting members 32, so that the adjustable blades 1 are rotated as shown in Fig. 1 so as to suitably throttle the exhaust gas G, with the result that the flow rate of the exhaust gas is regulated.

### [2] Surface Modification

A coating process may use a TD salt bath method, a fluidized bed method, a gas soft nitriding method, a chromizing method, an ion plating method or the like in terms of surface modification property, workability, dimensional accuracy or the like. Various examples will now be described, including methods for applying a surface modification to the surface of a heat resisting member constituting a sliding portion of the exhaust gas guide assembly according to the present invention, and other coating methods described for explanatory purposes. A coating may be formed (manufacture) according to the following steps.

### (1) Coating

### (i) In the Case where the Adjustable Blade Is Made of SUS420J2

The adjustable blade is first degreased and cleaned, and set in a proper jig prepared for carrying out mass-processing. Then, maintaining the temperature for processing uniformly, the blade is pre-heated at approximately 500°C in order to avoid the degradation of corrosion resistance and the embrittlement of the material caused by the sensitization at 600-800°C specific to a stainless steel. Then, the blade is placed in a predetermined treatment apparatus and coating is carried out with respect to the blade by causing a predetermined reaction, and thereafter the blade is cleaned. It is desirable to mask a distal end of the shaft portion (axis portion) since it is subjected to a caulking process after coating.

### (ii) In the Case where the Adjustable Blade Is Made of SUS310S

When a carburizing process is not applied to the blade in advance, it is coated in the same method as above.

When a carburizing process is applied, after cleaning of the surface, carbon is caused to be contained in a supersaturated state in a region at least approximately 10 µm from the surface in a predetermined method, and thereafter, the blade is processed in the same method as above.

### (iii) In the Case where the Turbine Frame is Made of SUS310S

The procedure is basically same as that of the case for the adjustable blade. However, since the frame is large and heavy, it is necessary to make the jig to hold the frame robust when carrying out the processes. AS described for the case of the adjustable blade, since the amount of dissolved carbon is small in the case of SUS310S, it is necessary to cause carbon to be contained (carburized) in an unequilibrium supersaturated state:

### (iv) In the Case where the Turbine Frame Is Made of SCH21

The frame is coated in the same method as above.

### (v) In the Case where the Turbine Frame Is Made of Incoloy 800H

The frame is coated in the same method as above.

### (vi) In the Case where the Assembly Component Is Made of Nickel-Containing Heat Resisting Material

A component of an exhaust gas guide assembly made of a nickel-containing heat resisting member or an austenitic heat resisting material which is a kind of the nickel-containing heat resisting member is degreased and cleaned, and set in a proper jig. Then, the component is pre-heated at approximately 500°C for homogenizing the temperature for a salt bath process and in order to avoid the sensitization. Then, the component is placed in a surface modification apparatus, a coating is formed on the surface by causing predetermined reactions and the component is cleaned.

### (vii) In the Case where the Assembly Component Is Made of Nickel-Free Heat Resisting Member

A component of an exhaust gas guide assembly made of a nickel-free heat resisting member or ferritic SUS type heat resisting member is processed in a salt bath consisting of borax, chlorides, chromium oxides in the case of a TD salt bath method, or in powder consisting of chromium powder and assistants in the case of a chromizing method, whereby a carbide coating is formed respectively.

### (viii) In the Case where the Sliding Portion Is Coated with Chromium Carbide Coating Having a Thickness of 5µm or More

First, in order to secure the coating formability of a subsequent process, a heat resisting member of the present invention is permeated with carbon in the vicinity of the surface thereof.

Next, the carburized member is coated with chromium carbide by dipping it in a salt bath at approximately 1000°C including mainly borax. containing chromium oxide and causing high-temperature surface reactions.

### (ix) In the Case where the Sliding Portion Is Coated with Substantially Single Phase Chromium Carbide

The component is degreased and cleaned and set in a proper jig. Then, the component is pre-heated at approximately 500°C for homogenizing the temperature for a salt bath and in order to avoid the sensitization of the component raw material. Then, the component is dipped in a salt bath treatment apparatus consisting of borax, chlorides and chromium oxide and coating is formed by causing predetermined reactions, and the component is cleaned.

### (x) In the Case where the Assembly Component Is Made of High-Nickel and High-Chromium Heat Resisting Raw Material

### (a) Plasma Method

The member is set in a proper jig and carbon atoms are ionized (plasma state) under a high vacuum, then, carburization is carried out by causing the carbon to permeate into the material as one electrode. Then, after cleaning the surface of the member, carbide coating reaction is caused by dipping the member in a borax/chloride mixture salt bath containing chromium oxide at approximately 1000°C. Thereafter, the member is neutralized and cleaned and a predetermined coating is formed.

### (b) Reduced pressure Method

The member is set in a proper jig and a thin oxide layer on the surface thereof is removed in hydrogen in a reduced pressure. Thereafter, carburization is carried out by flowing methane or acetylene pulsedly. Then, the surface of the member is cleaned and carbide coating reaction is caused by dipping the member in a borax/chloride mixture salt bath containing chromium oxide and maintained at approximately 1000°C. Thereafter, the member is neutralized and cleaned and a predetermined coating is formed.

### (xi) In the Case where the Assembly Component Is Made of a Non-High Temperature Member

Vapor of Ti and A1 are generated by applying a high voltage to Ti and Al as a target, and a proper amount of N is mixed in the generated vapor and the mixture is deposited on the targeted component. In this case, the upper limit temperature of the targeted component may be 500°C.

### (2) Durability, Slidability and Heat Resistance

As a result of forming a coating of the above (i)-(xi), the high-temperature hardness is improved by 50% or more, the oxidation resistance is improved and seizure is prevented. Therefore, high-temperature durability is significantly enhanced.

Table 2 shows the data of comparison of durability between a non-coated product and a coated product including coated products according to the present invention.

As to the coating on the sliding portion, due to the coating of (vii), long-time slidability under a high-temperature condition of 800°C or more is improved (the kinetic friction coefficient of 2 or more (without the coating) is lowered to about 0.5 or less) and seizure does not occur at all. Therefore, the slidability is significantly improved. Furthermore, due to the coating of (viii), as a result of measurement of the kinetic sliding friction coefficient, apparent differences occurred such as that the kinetic friction coefficient µ obtained in a sliding test performed for 850°C×100 hours is respectively µ> 2 without the coating, µ= 0.5-1.0 with a chromium carbide mixture phase coating formed and u<0.5 with a substantially chromium carbide single-phase (C₇C₃) coating formed.

Furthermore, in the case of the coating of (x), the high-temperature sliding friction coefficient at 850°C is lowered to about 1/10 as compared to the case where no coating process is applied, so that it is possible for a vehicle to run for 0.5 million km or more.

Furthermore, as to the case where the coating of (xi) is formed, occurrence of heat strain by 1-2% is usually inevitable when a targeted component is processed at a high temperature of approximately 1000°C, however, -the heat strain is reduced to 1/2-1/5 with the coating formed. It is considered that this is because the forming process of the coating can be finished in a short time of only several minutes as compared to the conventional process which requires several hours.

### (3) The Relation between the Surface Modification and Applicable Raw Material

The relation between the surface processing and applicable raw material, that improves heat resistance will be summarized- In the case of the raw material containing a relatively small amount of carbon (for example, the carbon content is approximately 0.1% or less), a carburizing process for permeating carbon into the surface of the raw material is generally carried out. On the other hand, in the case of the raw material containing a relatively large amount of carbon (for example, the carbon content is approximately 0.1% or more), a coating of carbide or nitride is formed on the surface of the raw material without applying any carburizing process. That is, for the member described herein, a low-carbon steel such as a high-nickel and high-chromium heat -resisting member is mainly subjected to a carburizing process and a high-carbon steel such as a nickel-containing austenitic member, some ferritic SUS type heat resisting member or the like is not subjected to any carburizing process. Of course, SUH310, SCH21, SCH22 and the like exemplified herein as the high-nickel and high-chromium heat resisting member include those that are not a low-carbon steel as classified into common categories. However, it is possible to apply a carburizing process to such members when necessary.

### INDUSTRIAL APPLICABILITY

As set forth hereinabove, the present invention is suitable for the case where it is desired to significantly extend the life of endurance of an exhaust gas guide assembly for a VGS turbocharger by applying a proper surface modification to a heat resisting member which constitutes the assembly and which is made of a raw material having heat resistance, for example, SUS, SUH, SCN, NCF superalloy or the like according to the JIS.

## Claims

1. An exhaust gas guide assembly (A), having a surface modification applied thereto, for a VGS turbocharger, comprising:
adjustable blades (1) for suitably controlling the flow rate of exhaust gas (G) discharged from an engine to rotate an exhaust turbine wheel (T);
a turbine frame (2) which rotatably supports the adjustable blades (1) at the outside of an outer periphery of the turbine wheel (T); and
a blade adjusting mechanism (3) for suitably rotating the adjustable blades (1) to control the flow rate of the exhaust gas (G);
wherein flow of the exhaust gas at a low flow rate is throttled by the adjustable blades (1) to increase the velocity of the exhaust gas so that a high output power is obtained at low rotational speeds, **characterized in that**:
a heat resisting member (1,2) constituting a sliding portion (12,25) of the exhaust gas guide assembly (A) is provided with a coating of chromium carbide having a thickness of not less than 5 µm on surfaces of the sliding portion (12,25) which come into plane contact with each other.

2. An exhaust gas guide assembly (A), having a surface modification applied thereto, for a VGS turbocharger as defined in claim 1, **characterized in that**:
the coating of chromium carbide is in a single phase.

3. An exhaust gas guide assembly (A), having a surface modification applied thereto, for a VGS turbocharger as defined in claim 1 or 2, **characterized in that**:
the heat resisting member (1,2) constituting the sliding portion (12,25) comprises a nickel-chromium heat resisting member.

4. An exhaust gas guide assembly (A), having a surface modification applied thereto, for a VGS turbocharger as defined in claim 1 or 2, **characterized in that**:
the heat resisting member (1,2) constituting the sliding portion (12,25) comprises a nickel-containing heat resisting member.

5. An exhaust gas guide assembly (A), having a surface modification applied thereto, for a VGS turbocharger as defined in claim 1 or 2, **characterized in that**:
the heat resisting member (1,2) constituting the sliding portion (12,25) comprises a nickel-containing austenitic heat resisting member.

6. An exhaust gas guide assembly (A), having a surface modification applied thereto, for a VGS turbocharger as defined in claim 1 or 2, **characterized in that**:
the heat resisting member (1,2) constituting the sliding portion (12,25) comprises a nickel-free heat resisting member.

7. An exhaust gas guide assembly (A), having a surface modification applied thereto, for a VGS turbocharger as defined in claim 1 or 2, **characterized in that**:
the heat resisting member (1,2) constituting the sliding portion (12,25) comprises a ferritic SUS type heat resisting member.

8. An exhaust gas guide assembly (A), having a surface modification applied thereto, for a VGS turbocharger as defined in claim 1 or 2, **characterized in that**:
the heat resisting member (1,2) constituting the sliding portion (12,25) comprises a high-nickel and high-chromium heat resisting member.

9. An exhaust gas guide assembly (A), having a surface modification applied thereto, for a VGS turbocharger as defined in any one of claims 1-8, **characterized in that**:
the coating provided on the heat resisting member (1,2) constituting the sliding portion (12,25) comprises Cr₇C₃ and/or Cr₂₃C₆.

10. A method for applying a surface modification to a component member of an exhaust gas guide assembly (A) for a VGS turbocharger, wherein the exhaust gas guide assembly includes
adjustable blades (1) for suitably controlling the flow rate of exhaust gas (G) discharged from an engine to rotate an exhaust turbine wheel (T);
a turbine frame (2) which rotatably supports the adjustable blades (1) at the outside of an outer periphery of the turbine wheel (T); and
a blade adjusting mechanism (3) for suitably rotating the adjustable blades (1) to control the flow rate of the exhaust gas (G);
wherein flow of the exhaust gas at a low flow rate is throttled by the adjustable blades (1) to increase the velocity of the exhaust gas so that a high output power is obtained at low rotational speeds, and the component member of the exhaust gas guide assembly (A) is subjected to a surface treatment, **characterized in that**:
the method comprises the steps of:
removing a thin layer of oxide from a surface of a high-nickel and high-chromium heat resisting member (1,2) constituting a sliding portion (12,25) of the exhaust gas guide assembly (A) in advance by a reducing gas under a reduced pressure;
then performing a treatment with a carburizing gas having a weak inter-carbon polymerization; and
subsequently, coating the surface of the high-nickel and high-chromium heat resisting member (1,2) constituting said sliding portion (12,25) of the exhaust gas guide assembly (A) with a coating of chromium carbide having a thickness of not less than 5 µm on surfaces of the sliding portion (12,25) which come into plane contact with each other.

11. A method for applying a surface modification to a component member of an exhaust gas guide assembly (A) for a VGS turbocharger as defined in claim 10, **characterized in that**:
the coating of chromium carbide is formed in a single phase.

12. A method for applying a surface modification to a component member of an exhaust gas guide assembly (A) for a VGS turbocharger as defined in claim 10, **characterized in that**:
the treatment with a carburizing gas is carried out by making the carburizing gas flow pulsedly.

13. A method for applying a surface modification to a component member of an exhaust gas guide assembly (A) for a VGS turbocharger, wherein the exhaust gas guide assembly includes
adjustable blades (1) for suitably controlling the flow rate of exhaust gas (G) discharged from an engine to rotate an exhaust turbine wheel (T);
a turbine frame (2) which rotatably supports the adjustable blades (1) at the outside of an outer periphery of the turbine wheel (T); and
a blade adjusting mechanism (3) for suitably rotating the adjustable blades (1) to control the flow rate of the exhaust gas (G);
wherein flow of the exhaust gas at a low flow rate is throttled by the adjustable blades (1) to increase the velocity of the exhaust gas so that a high output power is obtained at low rotational speeds, and the component member of the exhaust gas guide assembly (A) is subjected to a surface treatment, **characterized in that**:
the method comprises the steps of:
ionizing carbon atoms under a reduced pressure in a plasma;
carburizing a high-nickel and high-chromium heat resisting member (1,2) constituting a sliding portion (12,25) of the exhaust gas guide assembly (A) with ionized carbon atoms to form an unequilibrium saturated solid-solution while the member (1,2) is serving as an electrode; and
subsequently, coating the surface of the high-nickel and high-chromium heat resisting member (1,2) constituting said sliding portion (12,25) of the exhaust gas guide assembly (A) with a coating of chromium carbide having a thickness of not less than 5 µm on surfaces of the sliding portion (12,25) which come into plane contact with each other.

14. A method for applying a surface modification to a component member of an exhaust gas guide assembly (A) for a VGS turbocharger as defined in claim 13, **characterized in that**:
the coating of chromium carbide is formed in a single phase.

15. A method for applying a surface modification to a component member of an exhaust gas guide assembly (A) for a VGS turbocharger as defined in any one of claims 10 to 14, **characterized in that**:
the coating of chromium carbide provided on the member constituting the sliding portion (12,25) comprises Cr₇C₃ and/or Cr₂₃C₆.

16. A method for applying a surface modification to a component member of an exhaust gas guide assembly (A) for a VGS turbocharger as defined in any one of claims 10 to 15, **characterized in that**:
the surface is coated with chromium carbide by a TD salt bath method.

## Patentansprüche

1. Eine Abgasführungsanordnung (A) mit einer darauf aufgebrachten Oberflächenmodifikation für einen VGS Turbolader, umfassend:
einstellbare Schaufeln (1) zum angemessenen Steuern der Strömungsrate von Abgas (G), welches von einem Motor abgeführt wird, um ein Abgasturbinenrad (T) zu drehen;
ein Turbinenrahmen (2), der die einstellbaren Schaufeln (1) drehbar an der Außenseite eines äußeren Umfangs des Turbinenrads (T) stützt; und
ein Schaufelstellmechanismus (3) zum angemessenen Drehen der einstellbaren Schaufeln (1), um die Strömungsrate des Abgases (G) zu steuern;
wobei die Strömung des Abgases bei einer niedrigen Strömungsrate von den einstellbaren Schaufeln (1) gedrosselt wird, um die Geschwindigkeit des Abgases zu erhöhen, sodass eine hohe Ausgangsleistung bei niedrigen Drehzahlen erhalten wird, **dadurch gekennzeichnet, dass**:
ein hitzebeständiges Element (1, 2), das einen Gleitabschnitt (12, 25) der Abgasführungsanordnung (A) darstellt, mit einer Beschichtung aus Chromkarbid versehen ist, die eine Dicke von nicht weniger als 5 µm auf den Flächen des Gleitabschnitts (12, 25) hat, die in flächigen Kontakt miteinander kommen.

2. Eine Abgasführungsanordnung (A) mit einer darauf aufgebrachten Oberflächenmodifikation für einen VGS Turbolader nach Anspruch 1, **dadurch gekennzeichnet, dass**:
die Beschichtung aus Chromkarbid in einer einzelnen Phase ist.

3. Eine Abgasführungsanordnung (A) mit einer darauf aufgebrachten Oberflächenmodifikation für einen VGS Turbolader nach einem der Ansprüche 1 oder 2, **dadurch gekennzeichnet, dass**:
das hitzebeständige Element (1, 2), das den Gleitabschnitt (12, 25) darstellt, ein hitzebeständiges Nickel-Chrom-Element umfasst.

4. Eine Abgasführungsanordnung (A) mit einer darauf aufgebrachten Oberflächenmodifikation für einen VGS Turbolader nach einem der Ansprüche 1 oder 2, **dadurch gekennzeichnet, dass**:
das hitzebeständige Element (1, 2), das den Gleitabschnitt (12, 25) darstellt, ein nickelhaltiges hitzebeständiges Element umfasst.

5. Eine Abgasführungsanordnung (A) mit einer darauf aufgebrachten Oberflächenmodifikation für einen VGS Turbolader nach einem der Ansprüche 1 oder 2, **dadurch gekennzeichnet, dass**:
das hitzebeständige Element (1, 2), das den Gleitabschnitt (12, 25) darstellt, ein nickelhaltiges austenitisches hitzebeständiges Element umfasst.

6. Eine Abgasführungsanordnung (A) mit einer darauf aufgebrachten Oberflächenmodifikation für einen VGS Turbolader nach einem der Ansprüche 1 oder 2, **dadurch gekennzeichnet, dass**:
das hitzebeständige Element (1, 2), das den Gleitabschnitt (12, 25) darstellt, ein nickelfreies hitzebeständiges Element umfasst.

7. Eine Abgasführungsanordnung (A) mit einer darauf aufgebrachten Oberflächenmodifikation für einen VGS Turbolader nach einem der Ansprüche 1 oder 2, **dadurch gekennzeichnet, dass**:
das hitzebeständige Element (1, 2), das den Gleitabschnitt (12, 25) darstellt, ein ferritisches hitzebeständiges Element vom SUS Typ umfasst.

8. Eine Abgasführungsanordnung (A) mit einer darauf aufgebrachten Oberflächenmodifikation für einen VGS Turbolader nach einem der Ansprüche 1 oder 2, **dadurch gekennzeichnet, dass**:
das hitzebeständige Element (1, 2), das den Gleitabschnitt (12, 25) darstellt, ein hochnickelhaltiges und hochchromhaltiges hitzebeständiges Element umfasst.

9. Eine Abgasführungsanordnung (A) mit einer darauf aufgebrachten Oberflächenmodifikation für einen VGS Turbolader nach einem der Ansprüche 1-8, **dadurch gekennzeichnet, dass**:
die Beschichtung, die auf dem hitzebeständigen Element (1, 2), das den Gleitabschnitt (12, 25) darstellt, vorgesehen ist, Cr₇C₃ und/oder Cr₂₃C₆ umfasst.

10. Ein Verfahren zum Aufbringen einer Oberflächenmodifikation auf ein Komponentenelement einer Abgasführungsanordnung (A) für einen VGS Turbolader, wobei die Abgasführungsanordnung aufweist
einstellbare Schaufeln (1) zum angemessenen Steuern der Strömungsrate von Abgas (G), welches von einem Motor abgeführt wird, um ein Abgasturbinenrad (T) zu drehen;
ein Turbinenrahmen (2), der die einstellbaren Schaufeln (1) drehbar an der Außenseite eines äußeren Umfangs des Turbinenrads (T) stützt; und
ein Schaufelstellmechanismus (3) zum angemessenen Drehen der einstellbaren Schaufeln (1), um die Strömungsrate des Abgases (G) zu steuern;
wobei die Strömung des Abgases bei einer niedrigen Strömungsrate von den einstellbaren Schaufeln (1) gedrosselt wird, um die Geschwindigkeit des Abgases zu erhöhen, sodass eine hohe Ausgangsleistung bei niedrigen Drehzahlen erhalten wird, und das Komponentenelement der Abgasführungsanordnung (A) einer Oberflächenbehandlung ausgesetzt wird, **dadurch gekennzeichnet, dass**:
das Verfahren die folgenden Schritte umfasst:
Entfernen einer dünnen Schicht von Oxiden von der Oberfläche eines hochnickelhaltigen und hochchromhaltigen hitzebeständigen Elements (1, 2), das einen Gleitabschnitt (12, 25) der Abgasführungsanordnung (A) darstellt, im Voraus mittels eines reduzierenden Gases unter einem reduzierten Druck;
danach, Ausführen einer Behandlung mit einem Aufkohlungsgas, das eine schwache Zwischen-Kohlenstoff Polymerisation hat; und
anschließend, Beschichten der Oberfläche des hochnickelhaltigen und hochchromhaltigen hitzebeständigen Elements (1, 2), das den Gleitabschnitt (12, 25) der Abgasführungsanordnung (A) darstellt, mit einer Beschichtung aus Chromkarbid, die eine Dicke von nicht weniger als 5 µm auf den Flächen des Gleitabschnitts (12, 25) hat, die in flächigen Kontakt miteinander kommen.

11. Ein Verfahren zum Aufbringen einer Oberflächenmodifikation auf ein Komponentenelement einer Abgasführungsanordnung (A) für einen VGS Turbolader nach Anspruch 10, **dadurch gekennzeichnet, dass**:
die Beschichtung aus Chromkarbid in einer einzelnen Phase ausgebildet ist.

12. Ein Verfahren zum Aufbringen einer Oberflächenmodifikation auf ein Komponentenelement einer Abgasführungsanordnung (A) für einen VGS Turbolader nach Anspruch 10, **dadurch gekennzeichnet, dass**:
die Behandlung mit einem Aufkohlungsgas ausgeführt wird, indem die Strömung des Aufkohlungsgases gepulst ist.

13. Ein Verfahren zum Aufbringen einer Oberflächenmodifikation auf ein Komponentenelement einer Abgasführungsanordnung (A) für einen VGS Turbolader, wobei die Abgasführungsanordnung aufweist
einstellbare Schaufeln (1) zum angemessenen Steuern der Strömungsrate von Abgas (G), welches von einem Motor abgeführt wird, um ein Abgasturbinenrad (T) zu drehen;
ein Turbinenrahmen (2), der die einstellbaren Schaufeln (1) drehbar an der Außenseite eines äußeren Umfangs des Turbinenrads (T) stützt; und
ein Schaufelstellmechanismus (3) zum angemessenen Drehen der einstellbaren Schaufeln (1), um die Strömungsrate des Abgases (G) zu steuern;
wobei die Strömung des Abgases bei einer niedrigen Strömungsrate von den einstellbaren Schaufeln (1) gedrosselt wird, um die Geschwindigkeit des Abgases zu erhöhen, sodass eine hohe Ausgangsleistung bei niedrigen Drehzahlen erhalten wird, und das Komponentenelement der Abgasführungsanordnung (A) einer Oberflächenbehandlung ausgesetzt wird, **dadurch gekennzeichnet, dass**:
das Verfahren die folgenden Schritte umfasst:
lonisieren von Kohlenstoffatomen unter einem reduzierten Druck in einem Plasma;
Aufkohlen eines hochnickelhaltigen und hochchromhaltigen hitzebeständigen Elements (1, 2), das einen Gleitabschnitt (12, 25) der Abgasführungsanordnung (A) darstellt, mit ionisierten Kohlenstoffatomen, um eine im Ungleichgewicht befindliche gesättigte Festlösung zu bilden, während das Element (1, 2) als eine Elektrode dient; und
anschließend, Beschichten der Oberfläche des hochnickelhaltigen und hochchromhaltigen hitzebeständigen Elements (1, 2), das den Gleitabschnitt (12, 25) der Abgasführungsanordnung (A) darstellt, mit einer Beschichtung aus Chromkarbid, die eine Dicke von nicht weniger als 5 µm auf den Flächen des Gleitabschnitts (12, 25) hat, die in flächigen Kontakt miteinander kommen.

14. Ein Verfahren zum Aufbringen einer Oberflächenmodifikation auf ein Komponentenelement einer Abgasführungsanordnung (A) für einen VGS Turbolader nach Anspruch 13, **dadurch gekennzeichnet, dass**:
die Beschichtung aus Chromkarbid in einer einzelnen Phase ausgebildet ist.

15. Ein Verfahren zum Aufbringen einer Oberflächenmodifikation auf ein Komponentenelement einer Abgasführungsanordnung (A) für einen VGS Turbolader nach einem der Ansprüche 10 bis 14, **dadurch gekennzeichnet, dass**:
die Beschichtung aus Chromkarbid, die auf dem Element, das den Gleitabschnitt (12, 25) darstellt, vorgesehen ist, Cr₇C₃ und/oder Cr₂₃C₆ umfasst.

16. Ein Verfahren zum Aufbringen einer Oberflächenmodifikation auf ein Komponentenelement einer Abgasführungsanordnung (A) für einen VGS Turbolader nach einem der Ansprüche 10 bis 15, **dadurch gekennzeichnet, dass**:
die Oberfläche mittels einem TD Salzbadverfahren mit Chromkarbid beschichtet wird.

## Revendications

1. Ensemble de guidage de gaz d'échappement (A), ayant une modification de surface qui est lui appliquée, pour un turbocompresseur de type VGS, comprenant :
des pales ajustables (1) pour commander de manière appropriée le débit de gaz d'échappement (G) déchargé d'un moteur pour faire tourner une roue de turbine d'échappement (T) ;
un carénage de turbine (2) qui supporte à rotation les pales ajustables (1) à l'extérieur d'une périphérie externe de la roue de turbine (T) ; et
un mécanisme d'ajustement de pales (3) pour faire tourner de manière appropriée les pales ajustables (1) afin de commander le débit du gaz d'échappement (G) ;
dans lequel l'écoulement du gaz d'échappement à faible débit est étranglé par les pales ajustables (1) afin d'augmenter la vitesse du gaz d'échappement de sorte qu'une puissance de sortie élevée soit obtenue à faibles vitesses de rotation, **caractérisé en ce que** :
un élément résistant à la chaleur (1, 2) constituant une partie coulissante (12, 25) de l'ensemble de guidage de gaz d'échappement (A) est pourvu d'un revêtement de carbure de chrome ayant une épaisseur qui n'est pas inférieure à 5 µm sur des surfaces de la partie coulissante (12, 25) qui viennent en contact plan l'une avec l'autre.

2. Ensemble de guidage de gaz d'échappement (A), ayant une modification de surface qui lui est appliquée, pour un turbocompresseur de type VGS comme défini dans la revendication 1, **caractérisé en ce que** :
le revêtement de carbure de chrome est en phase unique.

3. Ensemble de guidage de gaz d'échappement (A) ayant une modification de surface qui lui est appliquée, pour un turbocompresseur de type VGS comme défini dans la revendication 1 ou la revendication 2, **caractérisé en ce que** :
l'élément résistant à la chaleur (1, 2) constituant la partie coulissante (12, 25) comprend un élément résistant à la chaleur au nickel-chrome.

4. Ensemble de guidage de gaz d'échappement (A) ayant une modification de surface qui lui est appliquée, pour un turbocompresseur de type VGS comme défini dans la revendication 1 ou la revendication 2, **caractérisé en ce que** :
l'élément résistant à la chaleur (1, 2) constituant la partie coulissante (12, 25) comprend un élément résistant à la chaleur contenant du nickel.

5. Ensemble de guidage de gaz d'échappement (A) ayant une modification de surface qui lui est appliquée, pour un turbocompresseur de type VGS comme défini dans la revendication 1 ou la revendication 2, **caractérisé en ce que** :
l'élément résistant à la chaleur (1, 2) constituant la partie coulissante (12, 25) comprend un élément résistant à la chaleur austénitique contenant du nickel.

6. Ensemble de guidage de gaz d'échappement (A) ayant une modification de surface qui lui est appliquée, pour un turbocompresseur de type VGS comme défini dans la revendication 1 ou la revendication 2, **caractérisé en ce que** :
l'élément résistant à la chaleur (1, 2) constituant la partie coulissante (12, 25) comprend un élément résistant à la chaleur exempt de nickel.

7. Ensemble de guidage de gaz d'échappement (A) ayant une modification de surface qui lui est appliquée, pour un turbocompresseur de type VGS comme défini dans la revendication 1 ou la revendication 2, **caractérisé en ce que** :
l'élément résistant à la chaleur (1, 2) constituant la partie coulissante (12, 25) comprend un élément résistant à la chaleur de type ferritique SUS.

8. Ensemble de guidage de gaz d'échappement (A) ayant une modification de surface qui lui est appliquée, pour un turbocompresseur de type VGS comme défini dans la revendication 1 ou la revendication 2, **caractérisé en ce que** :
l'élément résistant à la chaleur (1, 2) constituant la partie coulissante (12, 25) comprend un élément résistant à la chaleur à haute teneur en nickel et à haute teneur en chrome.

9. Ensemble de guidage de gaz d'échappement (A) ayant une modification de surface qui lui est appliquée, pour un turbocompresseur de type VGS comme défini dans l'une quelconque des revendications 1 à 8, **caractérisé en ce que** :
le revêtement appliqué sur l'élément résistant à la chaleur (1, 2) constituant la partie coulissante (12, 25) comprend du Cr₇C₃ et/ou du Cr₂₃C₆.

10. Procédé d'application d'une modification de surface à un élément composant d'un ensemble de guidage de gaz d'échappement (A) pour un turbocompresseur de type VGS, dans lequel l'ensemble de guidage de gaz d'échappement comprend :
des pales ajustables (1) pour commander de manière appropriée le débit de gaz d'échappement (G) déchargé d'un moteur afin de faire tourner une roue de turbine d'échappement (T) ;
un carénage de turbine (2) qui supporte à rotation les pales ajustables (1) à l'extérieur de la périphérie externe de la roue de turbine (T) ; et
un mécanisme d'ajustement de pales (3) pour faire tourner de manière appropriée les pales ajustables (1) afin de commander le débit du gaz d'échappement (G) ;
dans lequel l'écoulement du gaz d'échappement à faible débit est étranglé par les pales ajustables (1) afin de commander la vitesse du gaz d'échappement de sorte qu'une puissance de sortie soit obtenue à faibles vitesses de rotation et l'élément composant de l'ensemble de guidage de gaz d'échappement (A) est soumis à un traitement de surface, **caractérisé en ce que** :
le procédé comprend les étapes consistant à :
retirer une mince couche d'oxyde de la surface d'un élément résistant à la chaleur à haute teneur en nickel et à haute teneur en chrome (1, 2) constituant une partie coulissante (12, 25) de l'ensemble de guidage de gaz d'échappement (A) à l'avance par un gaz réducteur sous pression réduite ;
puis effectuer un traitement avec un gaz de carburation ayant une faible polymérisation inter-carbone ; et
ensuite, revêtir la surface de l'élément résistant à la chaleur à haute teneur en nickel et à haute teneur en chrome (1, 2) constituant ladite partie coulissante (12, 25) de l'ensemble de guidage de gaz d'échappement (A) par un revêtement de carbure de chrome ayant une épaisseur qui n'est pas inférieure à 5 µm sur les surfaces de la partie coulissante (12, 25) qui viennent en contact plan l'une avec l'autre.

11. Procédé d'application d'une modification de surface à un élément composant d'un ensemble de guidage de gaz d'échappement (A) pour un turbocompresseur de type VGS comme défini dans la revendication 10, **caractérisé en ce que** :
le revêtement de carbure de chrome est formé en phase unique.

12. Procédé d'application d'une modification de surface à un élément composant d'un ensemble de guidage de gaz d'échappement (A) pour un turbocompresseur de type VGS comme défini dans la revendication 10, **caractérisé en ce que** :
le traitement par un gaz de carburation est effectué en pulsant l'écoulement de gaz de carburation.

13. Procédé d'application d'une modification de surface à un élément composant d'un ensemble de guidage à gaz d'échappement (A) pour un turbocompresseur de type VGS, dans lequel l'ensemble de guidage de gaz d'échappement comprend :
des pales ajustables (1) pour commander de manière appropriée le débit de gaz d'échappement (G) déchargé d'un moteur afin de tourner une roue de turbine d'échappement (T) ;
un carénage de turbine (2) qui supporte à rotation les pales ajustables (1) à l'extérieur d'une périphérie externe de la roue de turbine (T) ; et
un mécanisme d'ajustement de pales (3) pour faire tourner de manière appropriée les pales ajustables (1) afin de commander le débit du gaz d'échappement (G) ;
dans lequel l'écoulement du gaz d'échappement à faible débit est étranglé par les pales ajustables (1) afin d'augmenter la vitesse du gaz d'échappement de sorte qu'une puissance de sortie élevée soit obtenue à faibles vitesses de rotation et l'élément composant de l'ensemble de guidage de gaz d'échappement (A) est soumis à un traitement de surface, **caractérisé en ce que** :
le procédé comprend les étapes consistant à :
ioniser les atomes de carbone sous pression réduite dans un plasma ;
carburer un élément résistant à la chaleur à haute teneur en nickel et à haute teneur en chrome (1, 2) constituant une partie coulissante (12, 25) de l'ensemble de guidage de gaz d'échappement (A) par des atomes de carbone ionisés pour former une solution solide saturée en déséquilibre, tandis que l'élément (1, 2) sert d'électrode ; et
ensuite, revêtir la surface de l'élément résistant à la chaleur à haute teneur en nickel et à haute teneur en chrome (1, 2) constituant ladite partie coulissante (12, 25) de l'ensemble de guidage de gaz d'échappement (A) d'une couche de carbure de chrome ayant une épaisseur qui n'est pas inférieure à 5 µm sur les surfaces de la partie coulissante (12, 25) qui viennent en contact plan l'une avec l'autre.

14. Procédé d'application d'une modification de surface à un élément composant d'un ensemble de guidage de gaz d'échappement (A) pour un turbocompresseur VGS comme défini dans la revendication 13, **caractérisé en ce que** :
le revêtement de carbure de chrome est formé en phase unique.

15. Procédé d'application d'une modification de surface à un élément composant d'un ensemble de guidage de gaz d'échappement (A) pour un turbocompresseur de type VGS comme défini dans l'une quelconque des revendications 10 à 14, **caractérisé en ce que** :
le revêtement de carbure de chrome appliqué sur l'élément constituant la partie coulissante (12, 25) comprend du Cr₇C₃ et/ou du Cr₂₃C₆.

16. Procédé d'application d'une modification de surface à un élément composant d'un ensemble de guidage de gaz d'échappement (A) pour un turbocompresseur de type VGS comme défini dans l'une quelconque des revendications 10 à 15, **caractérisé en ce que** :
la surface est revêtue de carbure de chrome par un procédé au bain de sel TD.
